# EUROPÄISCHE PATENTSCHRIFT

(11) **EP 1 668 412 B1**
(45) Veröffentlichungstag und Bekanntmachung des Hinweises auf die Patenterteilung: **14.03.2007**
(21) Anmeldenummer: 04786875.7
(22) Anmeldetag: 23.09.2004
(51) Int. Cl.: G03D 15/00, G03B 19/18, G03B 17/26, B08B 1/00, B08B 1/02

(54) **Laufbildkamera mit Filmmagazin und Mitteln zum Reinigen des Films**
Motion picture camera having a film magazine and means for cleaning the film
Caméra cinématographique ayant un magasin à film et des moyens pour le nettoyage du film

(30) Priorität: 25.09.2003 DE 20315149 U
(43) Veröffentlichungstag der Anmeldung: 14.06.2006
(73) Patentinhaber: ARNOLD & RICHTER CINE TECHNIK GMBH & CO. BETRIEBS KG, 80799 München (DE)
(72) Erfinder: TRAUNINGER, Walter, A-2381 Laab im Walde (AT)
(74) Vertreter: Ninnemann, Detlef
(86) Internationale Anmeldenummer: PCT/DE2004/002163
(87) Internationale Veröffentlichungsnummer: WO 2005/031457

(56) Entgegenhaltungen:
- EP-A- 0 355 407
- DE-U1- 29 800 862
- GB-A- 639 858
- US-A- 4 925 779
- US-B1- 6 359 675

## Beschreibung

Die Erfindung bezieht sich auf eine Laufbildkamera mit einem Filmmagazin gemäß dem Oberbegriff des Anspruchs 1.

Eine derartige kamera ist z.B. aus der US 6 359 675 B1 bekannt.

Auf der Oberfläche eines Laufbildfilms, insbesondere auf der Seite der lichtempfindlichen Emulsionsschicht des Laufbildfilms befindliche Staubkörper, Fussel oder andere Fremdkörper können bei der Benutzung des Laufbildfilms zu einer Beschädigung der Filmoberfläche unter anderem in Form von Kratzern führen, die bei der späteren Filmentwicklung, Filmbearbeitung und Projektion des Laufbildfilmes nicht mehr zu entfernen und äußerst störend sind. Insbesondere beim Filmtransport innerhalb der Laufbildkamera, bei dem der Laufbildfilm von einer innerhalb eines mit der Laufbildkamera verbundenen Filmmagazins angeordneten Filmvorratsrolle abgewickelt, über ein so genanntes "Magazinmaul" der Filmkamera zugeführt, über eine Vorwickel-Zahnrolle zum Bildfenster, wo der Laufbildfilm belichtet wird, sowie über eine Nachwickel-Zahnrolle und das Magazinmaul zurück zum Filmmagazin transportiert und dort der belichtete Laufbildfilm auf eine Aufwickelrolle aufgewickelt wird, können die Oberflächen des Laufbildfilms mit Teilen der Laufbildkamera und insbesondere des Filmtransportmechanismus in Berührung kommen und dabei die auf den Oberflächen befindlichen Fremdkörper Kratzer auf der Oberfläche des Laufbildfilms verursachen. Aber auch ohne Berührung mit Teilen des Filmtransportmechanismus würden auf der Emulsionsschicht-Oberfläche des Laufbildfilms befindliche Staubkörner, Fussel oder sonstige Fremdkörper dazu führen, dass sie die Emulsionsschicht an dieser Stelle abdecken, so dass das betreffende Filmbild während seiner Belichtung im Bildfenster der Laufbildkamera an dieser Stelle unbelichtet bleibt und bei der späteren Betrachtung stört.

Zur Erfassung von auf einem Laufbildfilm befindlichen Fusseln ist aus der DE 298 00 862 U1 ein Betrachtungsgerät bekannt, mit dem Fussel und andere unerwünschte Gegenstände auf einem Laufbildfilm bzw. in der Nähe des Laufbildfilmes durch das Bildfenster einer Laufbildkamera beobachtet werden können. Das Betrachtungsgerät wird hierzu am oder in der Nähe des Objektivs der Laufbildkamera positioniert und das Bildfenster durch eine Leuchtquelle beleuchtet, um den Laufbildfilm im Bildfenster durch das Objektiv sichtbar zu machen und damit Fussel auf dem Laufbildfilm zu erkennen und zu entfernen.

Eine Betrachtung des Laufbildfilmes durch das Objektiv ist jedoch äußerst aufwändig und erfordert eine spezielle Beleuchtungseinrichtung, um eine Belichtung des Laufbildfilmes bei der Filmbetrachtung vor der eigentlichen Filmbelichtung zu vermeiden. Darüber hinaus erfordert die Entfernung der Fussel ein Anhalten des Laufbildfilms, was bei üblichen Filmlaufgeschwindigkeiten nicht oder nahezu unmöglich ist. Die erforderliche Handhabung ist aufwändig und erforderte einen zusätzlichen Betrachter des Laufbildfilms, so dass das bekannte Betrachtungsgerät unpraktikabel und für Filmaufnahmen untauglich ist.

Aus der DE 689 21 055 T2 ist es bekannt, transparente Schutzfolienbänder mit einem Klebstoffbelag auf den Oberflächen eines Fotostreifens anzubringen, wobei die mit Perforationslöchern versehenen Ränder des Fotostreifens unbedeckt bleiben. Dadurch soll vermieden werden, dass die Negativbilder auf dem Original-Fotostreifen infolge ungeschickter Handhabung während der Filmaufnahme oder während des Entwickelns verkratzt oder anderweitig beschädigt werden oder Staub, Fussel, Nahrungsmittel und andere Fremdstoffe in Berührung mit dem Fotostreifen kommen und dort hängen bleiben, so dass eine Reinigung oder ein Retouchieren des Films erforderlich ist, um eine gute Reproduktion oder Vergrößerung der Bilder zu erhalten.

Dieses Verfahren ist zum Schutz fotografischer Filme für Stehbildkameras, nicht jedoch für Laufbildfilme in Verbindung mit Laufbildkameras geeignet, da entweder der noch unbelichtete Laufbildfilm mit den beidseitigen Schutzfolien zu versehen und damit bei vorgegebener Filmlänge nicht mehr in einem üblichen Filmmagazin unterzubringen wäre. Ein Anbringen von Schutzfolien im Lauf der Laufbildkamera scheidet ebenfalls aus, weil hierfür aufwändige Zusatzgeräte erforderlich wären, die nicht mit dem Gebrauch und dem Betrieb einer Laufbildkamera zu vereinbaren sind. Zudem könnte auch das bekannte Verfahren nicht verhindern, dass auf der emulsionsseitigen Schutzfolie Fussel oder andere Fremdkörper anhaften, so dass der Laufbildfilm an dieser Stelle während der Belichtung der Filmbilder im Bildfenster der Laufbildkamera nicht belichtet wird und dadurch störende Schatten auf dem Laufbildfilm verbleiben.

Aufgabe der vorliegenden Erfindung ist es, eine Laufbildkamera mit einem Filmmagazin der eingangs genannten Art anzugeben, mit denen auf den Oberflächen des Laufbildfilmes, insbesondere auf der Emulsionsschicht des Laufbildfilmes befindliche Staubkörner, Fussel oder andere Fremdkörper vor der Belichtung des Laufbildfilmes sicher und mit geringem Kostenaufwand entfernt werden und eine einfache Handhabung gewährleistet ist.

Diese Aufgabe wird erfindungsgemäß durch die Merkmale des Anspruchs 1 gelöst.

Die erfindungsgemäße Lösung schafft eine Laufbildkamera mit einem Filmmagazin, mit denen auf den Oberflächen eines Laufbildfilms befindliche Staubkörner, Fussel oder andere Fremdkörper sicher und mit geringem Kostenaufwand entfernt werden und eine einfache Handhabung vor oder nach der Filmbelichtung im Stillstand der Laufbildkamera, beispielsweise bei einer erneuten Bestückung des Filmmagazins, gewährleistet ist.

Erfindungsgemäß besteht die Abtrennvorrichtung aus einer auf der Seite der lichtempfindlichen Emulsionsschicht des Laufbildfilmes abrollenden Reinigungsrolle mit einer Partikelaufnahme, wobei die Reinigungsrolle durch die auf der Seite der lichtempfindlichen Emulsionsschicht des Laufbildfilmes angeordnete, mit einer Partikelaufnahme versehene Filmabwickelrolle im Filmmagazin ausgebildet ist.

Grundsätzlich kann die Abtrennvorrichtung gegenüber einer oder beiden Oberflächenseiten des Laufbildfilmes, d.h. sowohl auf der Seite der lichtempfindlichen Emulsionsschicht als auch auf der Seite der Trägerschicht angeordnet werden. Wegen der vorstehend genannten Probleme von Fremdkörpern auf der lichtempfindlichen Emulsionsschicht wird die Abtrennvorrichtung jedoch auf der Seite der Emulsionsschicht des Laufbildfilmes angeordnet.

Die auf der bzw. den Oberflächen des Laufbildfilmes vorhandenen Fremdkörper können abgestreift oder nach einem weiterführenden Merkmal der Erfindung von der Abtrennvorrichtung aufgenommen werden, so dass die Fremdkörper durch die Abtrennvorrichtung gebunden werden.

Als optimaler Ort zur Anordnung der Abtrennvorrichtung dient vorzugsweise der Bereich zwischen der Filmvorratsspule des Filmmagazins und der Verbindung des Filmmagazins mit der Laufbildkamera, insbesondere im Bereich des Magazinmauls.

Als Reinigungsrolle kann auch eine mit einer Partikelaufnahme versehene Reinigungshülse eingesetzt werden, die auf die auf der Seite der lichtempfindlichen Emulsionsschicht des Laufbildfilmes angeordnete Filmabwickelrolle des Filmmagazins aufsteckbar ist.

Die Partikelaufnahme wird vorzugsweise durch eine die Fremdkörper von der Oberfläche des Laufbildfilmes ablösende Haftschicht realisiert. Die Haftschicht wird durch Auswechseln der die Haftschicht tragenden Reinigungsrolle nach jeder belichteten Filmspule oder in einem anderen vorgebbaren Intervall, beispielsweise alle zehn Filmrollen, erneuert und dadurch sichergestellt, dass je nach Verschmutzungsgrad des Laufbildfilmes die erforderliche Abtrennfunktion gewährleistet ist.

Das Auswechseln der die Haftschicht tragenden Reinigungsrolle kann durch einen Austausch der Filmaufwickelrolle oder der mit der Filmaufwickelrolle verbindbaren Reinigungshülse erfolgen, indem entweder die Filmabwickelrolle mit der daran angebrachten Haftschicht von einer Rollenachse der Filmabwickelrolle axial abgezogen wird oder die Reinigungshülse axial von der Filmabwickelrolle getrennt und eine mit einer neuen Haftschicht versehene Reinigungshülse auf die Filmabwickelrolle axial aufgesteckt wird.

Durch die leichte Entnehmbarkeit der Reinigungsrolle insbesondere bei deren Anordnung im Bereich des Magazinmauls des Filmmagazins ist ein leichter Austausch und damit eine hohe Akzeptanz bei der Verwendung der Abtrennvorrichtung gewährleistet.

Vorzugsweise besteht die Haftschicht aus einer Seite eines doppelseitigen Klebebandes.

Diese Ausführungsform gewährleistet eine einfache und wirtschaftliche Abtrennvorrichtung, bei der das doppelseitige Klebeband auf die zylindrische Oberfläche der auf die Filmabwickelrolle aufsteckbare Reinigungshülse oder auf die zylindrische Oberfläche der Filmabwickelrolle aufgeklebt wird.

Bei einem Drei-Rollen-Antrieb im Magazinmaul eines Filmmagazins mit einer mittigen Antriebsrolle und zu beiden Seiten der Antriebsrolle angeordneter Abwickelrolle und Aufwickelrolle ergibt sich eine besonders einfache Konstruktion zum Austausch einer Filmabwickelrolle bzw. bei einem vorgesehenen beidseitigen Reinigen des Laufbildfilms ein leichter Austausch der Filmabwickelrolle und der zentralen Antriebsrolle.

Alternativ zu einer Abtrennvorrichtung mit einem doppelseitigen Klebeband kann die Abtrennvorrichtung aus einer elektrostatischen Aufnahmevorrichtung bestehen, die gegenüber der die lichtempfindliche Emulsionsschicht tragenden Oberflächenseite oder gegenüber beiden Oberflächenseiten des Laufbildfilmes angeordnet ist.

Eine leichte Auswechselbarkeit der Reinigungsrolle(n) oder der elektrostatischen Aufnahmevorrichtung wird über einen an der Seite des Filmmagazins, insbesondere des Magazinmauls, oder des Kameragehäuses angeordneten Verschluss ermöglicht.

Anhand von in der Zeichnung dargestellten Ausführungsbeispielen soll der der Erfindung zugrunde liegende Gedanke näher erläutert werden. Es zeigen:
- Fig. 1 -: einen Schnitt durch eine Laufbildkamera mit angekoppeltem Filmmagazin und im Magazinmaul angeordneter, als Reinigungsrolle eingesetzter Filmabwickelrolle;
- Fig. 2 -: eine schematisch-perspektivische Darstellung der im Magazinmaul angeordneten und mit einem doppelseitigen Klebeband versehenen Filmabwickelrolle gemäß Fig. 1;
- Fig. 3 -: eine schematisch-perspektivische Darstellung einer auf die Filmabwickelrolle aufsteckbarer Reinigungshülse mit. einem doppelseitigen Klebeband und
- Fig. 4 -: eine schematisch-perspektivische Darstellung einer im Magazinmaul eines Filmmagazins angeordneten Reinigungsrolle mit umlaufender Nut zur Aufnahme eines doppelseitigen Klebebandes.

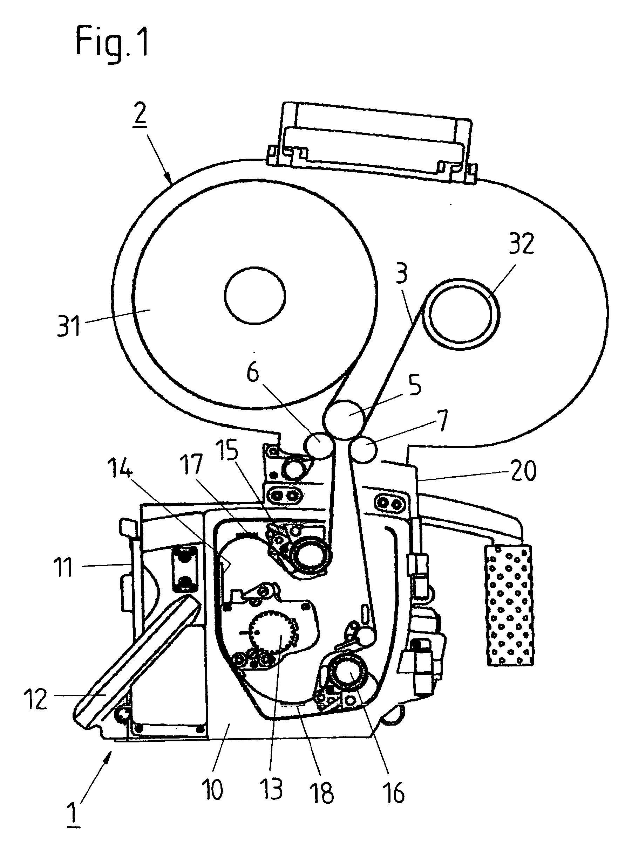

Fig. 1 zeigt einen Schnitt durch eine Laufbildkamera 1 mit angekoppeltem Filmmagazin 2, in dem ein noch unbelichteter Laufbildfilm 3 auf einer im Filmmagazin 2 angeordneten Filmvorratsspule 31 aufgewickelt ist. Der Laufbildfilm 3 wird über einen Filmtransportweg durch die Laufbildkamera 1 geführt, dort belichtet und auf eine den belichteten Laufbildfilm 3 aufnehmenden Filmrolle 32 aufgewickelt.

Die Laufbildkamera 1 weist ein Kameragehäuse 10 auf, an dessen Frontseite eine Objektivbefestigung zur Aufnahme Befestigung eines Kameraobjektivs und das mit einer zylinderscheibenförmigen Auswölbung zur Aufnahme einer rotierenden Spiegelblende 12 versehen ist, die den durch das Kameraobjektiv gelangenden Aufnahmestrahlengang abwechselnd in einen Sucher- und Videostrahlengang ablenkt bzw. zur Filmbelichtung zu einem Bildfenster 14 durchlässt.

Der Laufbildfilm 3 wird mittels eines Greiferschaltwerks 13 intermittierend an dem Bildfenster 14 vorbei bewegt. Der noch unbelichtete Laufbildfilm 3 wird mittels einer ersten Filmtransportzahnrolle 15 kontinuierlich von der Filmvorratsspule 31 im Filmmagazin 2 abgezogen und in die Laufbildkamera 1 transportiert, wo zum Ausgleich des kontinuierlichen Filmtransports der ersten Filmtransportzahnrolle 15 und des intermittierenden Betriebes des Greiferschaltwerks 13 eine Filmschleife ausgebildet wird, deren Größe mittels eines ersten Schleifensensors 17 geregelt wird. Nach der Filmbelichtung im Bildfenster 14 wird der Laufbildfilm 3 mittels einer zweiten Filmtransportzahnrolle 16 kontinuierlich zur Filmrolle 32 in das Filmmagazin 2 transportiert, wobei auch hier zum Ausgleich des intermittierenden Filmtransports durch das Greiferschaltwerk 13 und des kontinuierlichen Filmtransports mittels der zweiten Filmtransportzahnrolle 16 eine Filmschleife ausgebildet wird, deren Größe mittels eines zweiten Schleifensensors 18 geregelt wird.

In dem an eine Magazinaufnahme der Laufbildkamera 1 angekoppelten Magazinmaul 20 des Filmmagazins 2 befinden sich drei Filmtransportrollen 5, 6, 7, von denen die mittlere Filmtransportrolle 5 angetrieben wird und über den zwischen der Filmtransportrolle 5 und der Filmabwickelrolle 6 einerseits und der Filmtransportrolle 5 und der Filmaufwickelrolle 7 andererseits eingeklemmten Laufbildfilm 3 die Filmabwickelrolle 6 und die Filmaufwickelrolle 7 antreibt.

Die Filmtransportrolle 5 kann entweder mit einem magazineigenen Antrieb verbunden oder über Antriebsmittel mit dem die Filmzahnrollen 15, 16 antreibenden Filmtransportmotor oder dem die Filmzahnrollen 15, 16 getrennt antreibenden Filmtransportmotoren verbunden werden.

Haften auf der Oberfläche des auf der Filmvorratsspule 31 aufgewickelten unbelichteten Laufbildfilm 3, insbesondere auf dessen Oberfläche mit der lichtempfindlichen Emulsionsschicht, Partikel wie Staubkörner, Fussel oder andere Fremdkörper, so können diese auf dem Filmtransportweg von der Filmvorratsrolle 31 zum Bildfenster 14 Kratzer auf der Filmoberfläche hervorrufen, die bei der lichtempfindlichen Emulsionsschicht zu einer Beeinträchtigung der Qualität des Laufbildfilmes 3 führen oder bei ihrem Verbleib auch während der Filmbelichtung im Bildfenster 14 unbelichtete "schwarzen" Flecken verursachen, die die Aufnahmequalität deutlich mindern.

Um dies zu verhindern, ist die Filmabwickelrolle 6 als Reinigungsrolle ausgebildet und mit einer Haftschicht versehen, an der Staubkörner, Fussel oder andere Fremdkörper während des Transports durch den Spalt zwischen der Antriebsrolle 5 und der Filmabwickel- oder Reinigungsrolle 6 von der Oberfläche des Laufbildfilmes 3 abgelöst werden. Die von der Filmoberfläche abgelösten Partikel verbleiben auf der Haftschicht der Filmabwickel- oder Reinigungsrolle, die nach einem vorgebbaren Intervall ausgetauscht wird.

Der Austausch selbst erfolgt in einfacher Weise über einen Verschluß am Magazinmaul 20, indem die Filmabwickelrolle 6 von einer Rollenachse 4 in axialer Richtung abgezogen und eine mit einer fremdkörperfreien Haftschicht versehene Filmabwickelrolle 6 in axialer Richtung auf die Rollenachse 4 aufgesteckt wird.

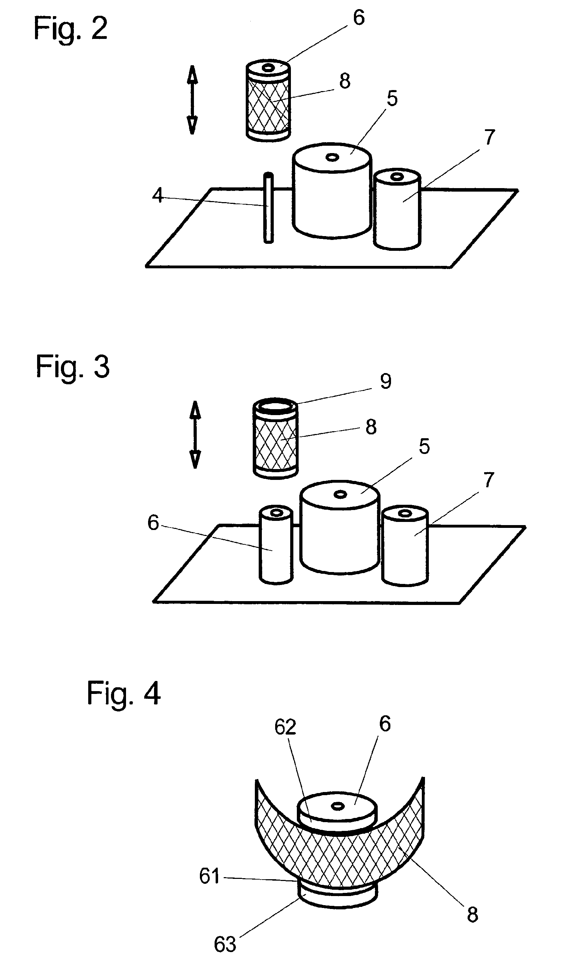

In den Fig. 2 bis 4 sind verschiedenen Ausführungsvarianten einer mit einer Haftschicht versehenen Reinigungsrolle perspektivisch dargestellt.

In der Ausführungsform gemäß Fig. 2 wird eine als Transport- und Reinigungsrolle eingesetzte Filmabwickelrolle 6 von der Rollenachse 4 in Richtung des Doppelpfeiles axial abgezogen bzw. auf die Rollenachse 4 aufgesteckt und weist eine Haftschicht 8 auf ihrer zylindrischen Oberfläche zum Ablösen von Partikeln auf der mit der lichtempfindlichen Emulsionsschicht versehenen Oberfläche des Laufbildfilmes 3 auf.

Die Haftschicht 8 besteht vorzugsweise aus einem doppelseitigen Klebeband, das in einfacher Weise auf die zylinderförmige Oberfläche der Filmabwickelrolle 6 aufgeklebt wird. Bei einem erforderlichen Austausch wird das doppelseitige Klebeband von der Filmabwickelrolle 6 abgezogen und ein neues doppelseitiges Klebeband auf die Zylinderfläche der Filmabwickelrolle 6 aufgebracht oder eine entsprechend präparierte Filmabwickelrolle 6 eingesetzt.

In der perspektivischen Darstellung gemäß Fig. 3 bleibt die Filmabwickelrolle 6 fest installiert, während eine hohlzylindrische Reinigungshülse 9 mit darauf angebrachter Haftschicht 8 auf die Filmabwickelrolle 6 aufgesetzt und arretiert wird. In dieser Ausführungsform ist der Durchmesser der Filmabwickelrolle 6 um die Dicke der Reinigungshülse 9 vermindert, um gleiche Verhältnisse wie in der Anordnung gemäß Fig. 2 zu erreichen. Auch in dieser Ausführungsform besteht die Haftschicht 8 vorzugsweise aus einem doppelseitigem Klebeband, das auf die Aussenzylinderfläche der Zylinderhülse 9 aufgebracht wird.

Fig. 4 zeigt in perspektivischer Ansicht eine Reinigungsrolle 6, die eine zumindest der Breite der Fümbelichtungsfläche des Laufbildfilmes entsprechende umlaufende Nut 61 aufweist, an die sich beidseitig zylindrische, erhabene Flächen 62, 63 anschließen. Die umlaufende Nut 61 dient zur Aufnahme eines doppelseitigen Klebebandes 8, dessen Dicke so bemessen ist, dass nach dem Ankleben des doppelseitigen Klebebandes 8 die umlaufende Nut 61 vollständig ausgefüllt und eine ebene zylindrische Oberfläche sichergestellt ist.

Ergänzend zu den vorstehend beschriebenen Ausführungsformen kann zur Partikelablösung von beiden Oberflächen des Laufbildfilmes 3 auch die Antriebsrolle 5 mit einer Haftschicht, insbesondere mit einem doppelseitigen Klebeband versehen werden.

Eine Alternative der erfindungsgemäßen Lösung besteht darin, anstelle einer Haftschicht eine elektrostatische Aufnahmevorrichtung als Abtrennvorrichtung zum Ablösen von Partikeln auf der bzw. den Oberflächen des Laufbildfilmes vorzusehen. Die elektrostatische Abtrennvorrichtung kann so eingerichtet und angeordnet werden, dass keine elektrostatische Aufladung des Laufbildfilmes erfolgt und die von der bzw. den Oberflächen des Laufbildfilmes abgelösten Partikel in einer geeigneten Aufnahmevorrichtung, beispielsweise entsprechend den vorstehend beschriebenen Ausführungsbeispielen mit einer Klebefläche aufgenommen werden.

## Patentansprüche

1. Laufbildkamera mit einem Filmmagazin (2), in dem eine Filmvorratsspule (31), von der ein zu belichtender Laufbildfilm (3) mit einer Trägerschicht und einer lichtempfindlichen, Emulsionsschicht abgegeben und über einen Filmtransportweg an einem Bildfenster (14) zur Bildbelichtung vorbei bewegt wird, und eine Filmaufwickelspule (32) angeordnet sind, auf die der belichtete Laufbildfilm (3) aufgewickelt wird,
wobei
im Filmtransportweg zwischen der Filmvorratsspule (31) im Filmmagazin (2) und dem Bildfenster (14) eine Vorrichtung (6, 8, 9) zum Abtrennen von auf einer oder beiden Oberflächen des Laufbildfilmes (3) befindlichen Fremdkörpern angeordnet ist, wobei die Abtrennvorrichtung (6, 8, 9) aus einer auf der Seite der lichtempfindlichen Emulsionsschicht des Laufbildfilmes (3) abrollenden Reinigungsrolle (6, 9) mit einer Partikelaufnahme (8) besteht, **dadurch gekennzeichnet, dass** die Reinigungsrolle (6, 9) aus der auf der Seite der lichtempfindlichen Emulsionsschicht des Laufbildfilmes (3) angeordneten Filmabwickelrolle (6) im Filmmagazin (2) besteht.

2. Laufbildkamera nach Anspruch 1, **dadurch gekennzeichnet, dass** die Abtrennvorrichtung (6, 8, 9) die auf der bzw. den Oberflächen des Laufbildfilmes (3) befindlichen Fremdkörper aufnimmt.

3. Laufbildkamera nach mindestens einem der voranstehenden Ansprüche, **dadurch gekennzeichnet, dass** die Abtrennvorrichtung (6, 8, 9) zwischen der Filmvorratsspule (31) und der Verbindung zwischen dem Filmmagazin (2) und der Laufbildkamera (1) angeordnet ist.

4. Laufbildkamera nach mindestens einem der voranstehenden Ansprüche, **dadurch gekennzeichnet, dass** die Reinigungsrolle (6, 9) aus einer Reinigungshülse (9) besteht, die auf die auf der Seite der lichtempfindlichen Emulsionsschicht des Laufbildfilmes (3) angeordnete Filmabwickelrolle (6) des Filmmagazins (2) aufsteckbar ist.

5. Laufbildkamera nach mindestens einem der voranstehenden Ansprüche, **gekennzeichnet durch** eine Haftschicht (8) zum Ablösen der Fremdkörper von der lichtempfindlichen Emulsionsschicht des Laufbildfilmes (3) und Aufnahme der Fremdkörper.

6. Laufbildkamera nach Anspruch 5, **dadurch gekennzeichnet, dass** die Haftschicht (8) auswechselbar ist.

7. Laufbildkamera nach Anspruch 5 oder 6, **dadurch gekennzeichnet, dass** die Haftschicht (8) aus einem doppelseitigen Klebeband besteht.

8. Laufbildkamera nach mindestens einem der voranstehenden Ansprüche, **dadurch gekennzeichnet, dass** die Reinigungsrolle (6, 9) auswechselbar ist.

9. Laufbildkamera nach Anspruch 8, **dadurch gekennzeichnet, dass** die Reinigungsrolle (6, 9) von einer Rollenachse (4) axial abziehbar ist.

10. Laufbildkamera nach Anspruch 8 oder 9, **dadurch gekennzeichnet, dass** die fremdkörperbelastete Reinigungshülse (9) von der Filmabwickelrolle (6) axial abziehbar und eine fremdkörperfreie Reinigungshülse (9) auf die Filmabwickelrolle (6) axial aufsteckbar jst.

11. Laufbildkamera nach mindestens einem der voranstehenden Ansprüche 1 bis 3, **dadurch gekennzeichnet, dass** die Abtrennvorrichtung aus einer elektrostatischen Aufnahmevorrichtung besteht.

12. Laufbildkamera nach Anspruch 11, **dadurch gekennzeichnet, dass** die elektrostatische Aufnahmevorrichtung auf beiden Oberflächenseiten des Laufbildfilmes (3) angeordnet ist.

13. Laufbildkamera nach mindestens einem der voranstehenden Ansprüche, **dadurch gekennzeichnet, dass** die Abtrennvorrichtung (6, 8, 9) über einen an der Seite des Filmmagazins (2) oder des Kameragehäuses (10) angeordneten Verschluss zugänglich ist.

## Claims

1. Motion picture camera having a film magazine (2), in which there are disposed a film supply reel (31), from which a motion picture film (3) to be exposed having a carrier layer and a light-sensitive emulsion layer is discharged and is moved over a film transport path past a picture window (14) for picture exposure, and a film winding reel (32), onto which the exposed motion picture film (3) is wound, a device (6, 8, 9) for separating foreign bodies on one or both surfaces of the motion picture film (3) being disposed in the film transport path between the film supply reel (31) in the film magazine (2) and the picture window (14), the separating device (6, 8, 9) comprising a cleaning roller (6, 9) having a particle pick-up means (8) and rolling on the side of the light-sensitive emulsion layer of the motion picture film (3), **characterized in that** the cleaning roller (6, 9) comprises the film feed roller (6) in the film magazine (2) disposed on the side of the light-sensitive emulsion layer of the motion picture film (3).

2. Motion picture camera according to Claim 1, **characterized in that** the separating device (6, 8, 9) picks up the foreign bodies on the surface or the surfaces of the motion picture film (3).

3. Motion picture camera according to at least one of the preceding claims, **characterized in that** the separating device (6, 8, 9) is disposed between the film supply reel (31) and the connection between the film magazine (2) and the motion picture camera (1).

4. Motion picture camera according to at least one of the preceding claims, **characterized in that** the cleaning roller (6, 9) comprises a cleaning sleeve (9) which can be plugged onto the film feed roller (6) of the film magazine (2) disposed on the side of the light-sensitive emulsion layer of the motion picture film (3).

5. Motion picture camera according to at least one of the preceding claims, **characterized by** an adhesive layer (8) for detaching the foreign bodies from the light-sensitive emulsion layer of the motion picture film (3) and picking up the foreign bodies.

6. Motion picture camera according to Claim 5, **characterized in that** the adhesive layer (8) can be replaced.

7. Motion picture camera according to Claim 5 or 6, **characterized in that** the adhesive layer (8) consists of a double-sided adhesive tape.

8. Motion picture camera according to at least one of the preceding claims, **characterized in that** the cleaning roller (6, 9) can be replaced.

9. Motion picture camera according to Claim 8, **characterized in that** the cleaning roller (6, 9) can be pulled axially off a roller axis (4).

10. Motion picture camera according to Claim 8 or 9, **characterized in that** the cleaning sleeve (9) loaded with foreign bodies can be pulled axially off the film feed roller (6) and a cleaning sleeve (9) free of foreign bodies can be plugged axially onto the film feed roller (6).

11. Motion picture camera according to at least one of the preceding Claims 1 to 3, **characterized in that** the separating device comprises an electrostatic pick-up device.

12. Motion picture camera according to Claim 11, **characterized in that** the electrostatic pick-up device is disposed on both surface sides of the motion picture film (3).

13. Motion picture camera according to at least one of the preceding claims, **characterized in that** the separating device (6, 8, 9) is accessible via a closure disposed on the side of the film magazine (2) or of the the camera housing (10).

## Revendications

1. Caméra cinématographique dotée d'un magasin à film (2) dans lequel une bobine (31) de réserve de film dont un film cinématographique (3) à exposer, qui présente une couche de support et une couche d'émulsion photosensible est extrait et est déplacé sur un parcours de transport de film devant une fenêtre d'exposition (14) pour y être exposé, et dans lequel une bobine (32) d'enroulement de film sur laquelle le film cinématographique (3) exposé est enroulé sont disposées, un dispositif (6, 8, 9) de séparation des corps étrangers présents sur une surface ou les deux surfaces du film cinématographique (3) étant disposé dans le magasin à film (2) sur le parcours de transport du film entre la bobine (31) de réserve de film et la fenêtre d'exposition (14), le dispositif de séparation (6, 8, 9) étant constitué d'un galet de nettoyage (6, 9) qui est doté d'un réceptacle (8) à particules et qui roule sur le côté de la couche d'émulsion photosensible du film cinématographique (3), **caractérisée en ce que** le galet de nettoyage (6, 9) est constitué du galet (6) de déroulement du film disposé dans le magasin de film (2) sur le côté de la couche d'émulsion photosensible du film cinématographique (3).

2. Caméra cinématographique selon la revendication 1, **caractérisée en ce que** le dispositif de séparation (6, 8, 9) reprend les corps étrangers présents sur la ou les surfaces du film cinématographique (3).

3. Caméra cinématographique selon au moins l'une des revendications précédentes, **caractérisée en ce que** le dispositif de séparation (6, 8, 9) est disposé entre la bobine (31) de réserve de film et le raccord entre le magasin à film (2) et la caméra cinématographique (1).

4. Caméra cinématographique selon au moins l'une des revendications précédentes, **caractérisée en ce que** le galet de nettoyage (6, 9) est constitué d'un manchon de nettoyage (9) qui peut être appliqué sur le galet (6) de déroulement du film disposé dans le magasin à film (2) sur le côté de la couche d'émulsion photosensible du film cinématographique (3).

5. Caméra cinématographique selon au moins l'une des revendications précédentes, **caractérisée par** une couche adhésive (8) qui détache les corps étrangers de la couche d'émulsion photosensible du film cinématographique (3) et qui reprend ces corps étrangers.

6. Caméra cinématographique selon la revendication 5, **caractérisée en ce que** la couche adhésive (8) est remplaçable.

7. Caméra cinématographique selon les revendications 5 ou 6, **caractérisée en ce que** la couche adhésive (8) est constituée d'un ruban adhésif double face.

8. Caméra cinématographique selon au moins l'une des revendications précédentes, **caractérisée en ce que** le galet de nettoyage (6, 9) est remplaçable.

9. Caméra cinématographique selon la revendication 8, **caractérisée en ce que** le galet de nettoyage (6, 9) peut être extrait axialement d'un axe (4) du galet.

10. Caméra cinématographique selon les revendications 8 ou 9, **caractérisée en ce que** le manchon de nettoyage (9) chargé en corps étrangers peut être extrait axialement du galet (6) de déroulement du film et **en ce qu'**un manchon de nettoyage (9) exempt de corps étrangers peut être enfiché axialement sur le galet (6) de déroulement du film.

11. Caméra cinématographique selon au moins l'une des revendications 1 à 3 qui précèdent, **caractérisée en ce que** le dispositif de séparation est constitué d'un dispositif électrostatique de reprise.

12. Caméra cinématographique selon la revendication 11, **caractérisée en ce que** le dispositif électrostatique de reprise est prévu sur les deux surfaces du film cinématographique (3).

13. Caméra cinématographique selon au moins l'une des revendications précédentes, **caractérisée en ce que** l'on peut accéder au dispositif de séparation (6, 8, 9) par une fermeture disposée latéralement sur le magasin à film (2) ou sur le boîtier (10) de la caméra.
